# EUROPEAN PATENT SPECIFICATION

(11) **EP 2 985 540 B1**
(45) Date of publication and mention of the grant of the patent: **14.12.2022**
(21) Application number: 14783112.7
(22) Date of filing: 08.04.2014
(51) Int. Cl.: F24F 11/00

(54) **AIR ENVIRONMENT REGULATING SYSTEM, AND CONTROLLING DEVICE**
UMGEBUNGSREGELUNGSSYSTEM UND STEUERUNGSVORRICHTUNG
SYSTÈME DE RÉGULATION D'ENVIRONNEMENT ATMOSPHÉRIQUE ET DISPOSITIF DE COMMANDE

(30) Priority: 09.04.2013 JP 2013081455
(43) Date of publication of application: 17.02.2016
(73) Proprietor: Panasonic Intellectual Property Management Co., Ltd., Osaka-shi, Osaka 540-6207 (JP)
(72) Inventor: YABUNOUCHI, Nobuaki, Osaka 540-6207 (JP); TAKAHASHI, Hayato, Osaka 540-6207 (JP); MURO, Naoki, Osaka 540-6207 (JP)
(74) Representative: Appelt, Christian W.
(86) International application number: PCT/JP2014/002003
(87) International publication number: WO 2014/167836

(56) References cited:
- EP-A2- 1 398 576
- WO-A1-2007/004446
- CN-A- 102 866 684
- JP-A- H0 544 973
- JP-A- H06 159 765
- JP-A- H07 324 793
- JP-A- H09 273 794
- JP-A- 2003 343 875
- JP-A- 2009 192 199
- US-A- 5 156 203
- US-A1- 2003 199 244
- US-A1- 2004 065 098
- US-A1- 2007 045 429
- US-A1- 2007 045 431
- US-A1- 2013 073 093

## Description

### Technical Field

The present invention relates to a controlling device for an air environment regulating system for regulating an air environment of an indoor space and an air environment regulating system.

### Background Art

Generally, an air environment of an indoor space is determined by an air quality, temperature, humidity, and the like. The air quality means a quality of air evaluated based on amounts of substances contained in air. The substances affecting on the air quality is classified into a physical factor, a chemical factor, and a biotic factor. The physical factor may be exemplified by particulate substances, cigarette smoke, and yellow sand. The chemical factor may be carbon dioxide, carbon monoxide, sulfur oxide, nitrogen oxide, and volatile organic substances. The volatile organic substances are, for example, formaldehyde. The biotic factor may be exemplified by pollens, spores of fungi, bacteria, viruses, and feces of mites.

Ventilation is useful for simple regulation on the air quality of the indoor space. However, particulate substances, yellow sand, sulfur oxide, nitrogen oxide, and pollens come from an outdoor space, and hence it is difficult to regulate the air quality by use of only ventilation. In some cases, the air quality can be improved by moving air between the indoor space and the outdoor space. However, depending on temperature and humidity of the outdoor space, ventilation may cause increase discomfort of the indoor space.

On the other hand, there has been proposed to use a combination of air conditioning devices, ventilators, and air purifiers, in order to regulate an air environment including an air quality, temperature, and humidity (e.g., see document 1 [JP 1993-44973 A]). Document 1 discloses a technique of performing the fuzzy inference based on feeling information on the air quality, and controlling air conditioning devices, ventilators, and air purifiers so as to make odor, temperature, and humidity become comfortable.

The technique disclosed in document 1 enables determination on the air environment in a manner close to human feeling, and detailed control on the air environment based on a result of the determination. However, comfortable feeling for the air environment is different for different individuals, and thus if control rules are standardized, there is a problem that the air environment which one or more persons-in-room feel comfortable cannot be achieved necessarily.

US 5,156,203 A discloses air conditioning systems and more particularly to an air conditioning system which provides air conditioning in each of a plurality of spaces. The air conditioning system according to the disclosure divides a space with partitions into a plurality of air conditioning spaces and controls the temperature by cooling and heating mediums supplied from an external heat source using a three-way valve and an expansion valve. The air conditioning system includes an ID card for identifying a person which uses the air conditioning system. If a person is present to use the air conditioning system, the set or measured values of the environmental conditions for that person is stored. When that person again uses the air conditioning system, the system calculates the environmental conditions stored by the person in accordance with his stored set or measured environmental condition values. Each of the individuals' preferred comfortable environments is automatically realized by calculating the set values for that person in accordance with his current or past set conditions independent of the space. Changes to his preference to the environmental conditions are easily made.

CN 102866684 A discloses an indoor environment integrated control system based on user comfort. The system comprises a human-computer interaction device, a detection device, a control device and a regulating device, wherein the human-computer interaction device is used for receiving the comfort information of a user about an indoor environment and generating a relevant comfort information signal; the detection device is used for detecting one or more current environment parameters of the indoor environment and generating relevant current environment parameter signals; the control device is used for receiving and analyzing the comfort information signal and the current environment parameter signals to obtain a target parameter domain of the indoor environment and generating an environment control signal corresponding to the target parameter domain; and the regulating device is used for executing regulating action according to the environment control signal so as to regulate the current environment parameters to be relevant target environment parameters. The disclosure also provides an indoor environment integrated control method based on user comfort. Indoor environment regulating equipment is regulated based on the subjective feeling of the user comfort, so that comfortable and satisfactory indoor environment can be provided for users.

JP 2003-343875 A addresses the problem of how to provide an air conditioner with ventilating function which performs the dehumidification in a room in winter without impairing the inside heating characteristic. As solution, it is suggested: This air conditionerhas a ventilating fanwhich introduces the outside air to the inside when the inside temperature or inside humidity is too high in winter. The introduction of outside air is executed when the relation of 'outside air enthalpy ≤ air enthalpy at set temperature and humidity < inside air enthalpy' or 'air enthalpy at set temperature and humidity ≤outside air enthalpy < inside air enthalpy' is established. According to such a structure, the outside air is mixed with the inside air by the introduction of the outside air, whereby the temperature or humidity of the inside air is lowered without leading to a reduction in air conditioning property in the room, and the comfortableness in the room is improved.

### Summary of Invention

The present invention relates to a controlling device according to independent claim 1 and to an air environment regulating system according to claim 6.

Some of the preferred embodiments are described in the dependent claims, in the description, and in the figures.

The present invention has aimed to propose an air environment regulating system capable of achieving an air environment comfortable for one or more persons-in-room in an indoor space. Further, the present invention has aimed to propose a controlling device to be used in the above air environment regulating system.

### Brief Description of the Drawings

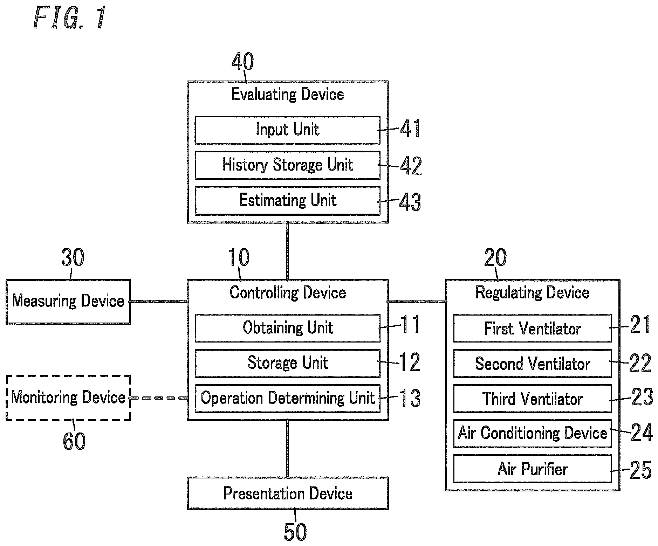

FIG. 1 is a block diagram illustrating one embodiment.

### Description of Embodiments

The air environment regulating system of one embodiment described below has a function of regulating an air quality, a temperature, and a humidity as the air environment of an indoor space. The temperature is a room temperature, and the humidity is a relative humidity. With regard to the air environment, one or both of the temperature and the humidity can be removed from a regulated target, and it is sufficient that the regulated target includes at least the air quality. The indoor space and the outdoor space are normally interpreted as an inside of a residence and an outside of a residence, and are alternatively interpreted as an intended room inside a residence and another space.

A regulating device for regulating the air environment includes a ventilator for ventilating the indoor space as a target whose air environment is to be regulated. The regulating device may include one or more devices selected from a group including an air purifier, a cooling and heating device, a humidifier, and a dehumidifier, in addition to one or more ventilators. The cooling and heating device may be an air conditioning device, typically. The ventilator may be classified into a ventilator for natural ventilation such as a window and a vent hole, and a ventilator for forced ventilation such as a ventilation fan. The ventilator for natural ventilation may be classified into a general window or a door which is openable and is associated with an opening allowing a person to pass therethrough and a small window or a vent hole which is openable and is associated with an opening not allowing a person to pass therethrough.

Hereinafter, a general window or a door for natural ventilation is referred to as a "first ventilator", and a small window or a vent hole for natural ventilation is referred to as a "second ventilator", and a device for forced ventilation such as a ventilation fan is referred to as a "third ventilator". The first ventilator and the second ventilator each are assumed to include a driving source, but may be configured to be manually operated by one or more persons-in-room in response to presentation of the control information.

The first ventilator and the second ventilate each only operate to open and close. The first ventilator and the second ventilate are lower in energy necessary for operation than the third ventilator. Therefore, when the air quality can be improved without using the third ventilator, at least one of the first ventilator and the second ventilator is used preferentially. Further, when the first ventilator is opened, there is a possibility that person or animals intrude into the indoor space. In contrast, as for the second ventilator, there is a low possibility that person or animals intrude into the indoor space. When the first ventilator is allowed to be opened, the second ventilator is also allowed to be opened.

The regulating device is configured to receive a signal including the control information from another device. The operation state of the regulating device is automatically determined in response to reception of the control information generated by a controlling device described later. Note that, the regulating device may be configured not to receive a signal from another device. When the regulating device cannot receive a signal from another device, the control information generated by the control device is presented to one or more persons-in-room inside the indoor space, and one or more persons-in-room sets the operation state of the regulating device in accordance with the control information by hand.

In this description, the number of persons-in-room inside the indoor space is assumed to be one. Note that, there are multiple persons-in-room inside the indoor space, it is sufficient that the evaluating device calculates feeling information representive of pieces of feeling information obtained from individual multiple persons-in-room. For example, the pieces of feeling information obtained from the individual multiple persons-in-room indicate one of two values corresponding to comfort and discomfort, one of the two values corresponding to the majority of the pieces of feeling information can be used as the feeling information representative thereof. Alternatively, when the feeling information is represented by a numerical value, the evaluating device can calculate a numerical value selected from a group including an average, a central value, a mode, a minimum value, a maximum value, and a difference between a maximum value and a minimum value, from the pieces of feeling information obtained from the individual multiple persons-in-room, and use a calculated numerical value as the feeling information representative thereof.

As shown in FIG. 1, the air environment regulating system described below includes a regulating device 20, a measuring device 30, a controlling device 10, and an evaluating device 40. The regulating device 20 is configured to regulate an air environment of an indoor space which includes an air quality. The measuring device 30 is configured to measure the air environment of the indoor space. The controlling device 10 is configured to generate control information for controlling the regulating device 20. The evaluating device 40 is configured to output feeling information reflecting a result of evaluating a degree of comfort with regard to the air environment of the indoor space by one or more persons-in-room. The controlling device 10 is configured to generate the control information by modifying, with the feeling information, basic information derived from measurement information with regard to the air environment measured by the measuring device 30.

As described above, the controlling device 10 is to constitute the air environment regulating system together with the regulating device 20, the measuring device 30, and the evaluating device 40. The controlling device 10 includes an obtaining unit 11, and an operation determining unit 13. The obtaining unit 11 is configured to obtain measurement information with regard to the air environment measured by the measuring device 30. The operation determining unit 13 is configured to generate the control information by modifying, with the feeling information, basic information derived from the measurement information.

Preferably, the air environment includes a temperature in addition to the air quality. In this case, the evaluating device 40 is preferably configured to output first feeling information regarding a result of evaluating the air quality by the one or more persons-in-room and second feeling information regarding a result of evaluating thermal comfort by the one or more persons-in-room.

The evaluating device 40 includes an input unit 41 configured to allow the one or more persons-in-room in the indoor space to input information regarding the feeling information, and is configured to output the feeling information indicative of the information inputted into the input unit 41. Or, the evaluating device 40 includes a history storage unit 42 and an estimating unit 43. The history storage unit 42 is configured to store one or more records each of which includes a combination of the measurement information, the control information, and the feeling information and added each time the control information is changed. The estimating unit 43 is configured to estimate the feeling information from a combination of the measurement information and the control information with reference to the one or more records stored in the history storage unit 42. The evaluating device 40 is configured to output the feeling information indicative of a result of estimation by the estimation unit 43.

The regulating device 20 may include one or more ventilators for causing a movement of air between the indoor space and an outdoor space. In this case, the measuring device 30 is configured to measure an air environment of the outdoor space in addition to the air environment of the indoor space. Further, the controlling device 10 is configured to determine, based on information of the air environment of the indoor space and the air environment of the outdoor space measured by the measuring device 30, whether to use the one or more ventilators 21, 22, 23.

The regulating device 20 may include a device configured to regulate at least one of an air quality evaluated based on amounts of substances included in an air in the indoor space, a temperature of the indoor space, and a humidity of the indoor space without causing a movement of air between the indoor space and the outdoor space.

As shown in FIG. 1, the air environment regulating system includes, in addition to the regulating device 20, the measuring device 30 configured to measure the air environments of the indoor space and the outdoor space and the controlling device 10 configured to generate the control information for controlling the regulating device 20. Further, the air environment regulating system includes the evaluating device 40 configured to output the feeling information reflecting a result of evaluating a degree of comfort with regard to the air environment of the indoor space by one or more persons-in-room. The feeling information outputted from the evaluating device 40 is reflected in the control information generated by the controlling device 10.

The controlling device 10 includes, as main hardware components, a device including one or more processors operating according to programs and a device serving as one or more interfaces. The one or more processors function as the controlling device 10 by executing programs for realizing the aforementioned functions. The device including the one or more processors may be a microcomputer incorporating one or more memories, or a microprocessor used together with one or more attached memories. Note that, the programs may be provided through an electric communication circuit such as the Internet, or provided by use of a computer readable recording medium.

The measuring device 30 is configured to measure an air quality, a temperature, and a humidity as information regarding the air environment, for each of the indoor space and the outdoor space. The air quality includes various factors, and therefore the measuring device 30 designed to measure one or more intended factors is used. Note that, it is preferable that the measuring device 30 be configured to additionally measure wind direction and wind speed. Further, environment factors such as noise and light pollution which are not classified into the air environment may be measured in order to improve the surrounding environment. For example, if noise is heard while the window is open, a technique of active muffling can be used or sound can be generated in the indoor space to achieve masking effects.

The controlling device 10 is configured to generate basic information for operating the regulating device 20 based on the information regarding the air environment measured by the measuring device 30, and further generate the control information by modifying the basic information with the feeling information outputted from the evaluating device 40.

The regulating device 20 includes: a first ventilator 21 such as a window; a second ventilator 22 such as a small window; and a third ventilator 23 such as a ventilation fan, and further includes an air conditioning device (so-called "air conditioner") 24 and an air purifier 25. Each of the first ventilator 21 and the second ventilator 22 may have any configuration, provided that it is openable.

The control information determining the operation of the regulating device 20 is generated by the controlling device 10. The controlling device 10 includes; the obtaining unit 11 configured to obtain the measurement information regarding the air environments of the indoor space and the outdoor space from the measuring device 30; and a storage unit 12 configured to store the measurement information obtained from the measuring device 30. The storage unit 12 is configured to associate two or more pieces of different measurement information which obtained by the obtaining unit 11 from the measuring device 30 at substantially the same time, with each other, and store them. Further, the controlling device 10 incorporates a clock (not shown) such as a real-time clock indicating day and time, and is configured to, when obtaining the measurement information, store the day and time indicated by the clock and obtained measurement information in the storage unit 12.

The controlling device 10 includes the operation determining unit 13 configured to generate the control information determining the operation of the regulating device 20. The operation determining unit 13 is configured to generate the basic information based on the measurement information obtained from the measuring device 30 and generate the control information by modifying the basic information with the feeling information outputted from the evaluating device 40. The controlling device 10 is configured to output a signal including the control information. The operation state of the regulating device 20 is controlled by the received control information.

As described above, basically, the regulating device 20 is configured to be operated when receiving a signal including the control information from another device. However, the regulating device 20 may be configured to be operated manually. When the regulating device 20 is configured to be operated manually, the air environment regulating system further includes the presentation device 50 for presenting the control information for controlling the regulating device 20 to one or more persons.

The presentation device 50 is preferably an operating and displaying device including a touch panel, but the touch panel is optional. Further, the presentation device 50 is not required to be a dedicated device, and may be realized by use of a general-purpose device such as a smartphone, a tablet, and a personal computer. When the presentation device 50 is realized by use of a general-purpose device, an application program for displaying the control information is executed or data is sent to enable a general-purpose web browser to display the control information.

The basic information is information indicative of a relationship between a condition indicative of a combination of the measurement information obtained from the measuring device 30 and a conclusion indicative of desired operation of the regulating device 20. For example, such basic information can be determined by calculating indoor air environments obtained by operating the regulating device 20 according to various types of the basic information with regard to the measurement information by simulation, and searching for the basic information optimizing the air environment.

The air environment in the present embodiment includes the air quality and further includes the temperature and the humidity. Hence, comfort of the air environment means not only comfort of the air quality but also comfort of the temperature and comfort of the humidity. In the present embodiment, the comfort of the temperature and comfort of the humidity are not distinguished, and the comfort of the temperature and the comfort of the humidity are treated collectively as thermal comfort. Thus, the comfort of the air quality is classified into two types of "comfortable" and "uncomfortable" but the thermal comfort is classified into three or more types including "comfortable" as a neutrality, "hot", and "cold". Note that, the "comfortable" of the air quality means a cleaned state of the air environment, and the "uncomfortable" means a polluted state of the air environment.

The thermal comfort is determined by searching for the basic information providing an optimal value (i.e., a comfortable state) of an index of comfort from the air environments determined by simulation. Note that, an index of the comfort can be selected from the discomfort index, the PMV (Predicted Mean Vote), and the like, for example. The discomfort index is determined by only temperature and humidity. The PMV is measured on a seven point scale, and is represented by a numerical value in a range of -3 to +3. Zero represents a comfortable state, and a change of 0.5 in the PMV corresponds to a change of about 1°C in temperature.

Note that, when the PMV is used as the index of comfort, information such as an air flow, thermal radiation, a metabolic rate, and an amount of clothing is necessary in addition to temperature and humidity. In many cases, fixed values different for different seasons are used for the information. Note that, when the measuring device 30 is configured to measure the wind speed and the wind direction for each of the indoor space and the outdoor space, it is preferable to perform the above simulation for different conditions of the air flow. Further, the above simulation may be performed for different conditions of the thermal radiation, the metabolic rate, and the amount of clothing, and the conditions thereof may be modified according to a structure of the indoor space, a season, and the like. Note that, an atmospheric temperature is a room temperature, and the humidity is a relative humidity.

The air environment comfortable for a person-in-room is different for different persons. When the basic information which is standardized and associated with the measurement information is used as the control information for the regulating device 20 without any modification, the air environment uncomfortable for the one or more persons-in-room is likely to be produced. In view of this, in order that the air environment of the indoor space becomes comfortable for the one or more persons-in-room, provided is the evaluating device 40 configured to output the feeling information reflecting the comfort of the one or more persons-in-room. The operation determining unit 13 is configured to generate the control information for the regulating device 20 by modifying the basic information with the feeling information outputted from the evaluating device 40.

According to the aforementioned processing, the operation determining unit 13 can reflect the feeling of one or more persons-in-room with regard to the comfort in the operation of the regulating device 20. In other words, the operation of the regulating device 20 is decided to produce the air environment suitable for the one or more persons-in-room of the indoor space.

The evaluating device 40 is configured to allow the one or more persons-in-room of the indoor space to input whether the indoor space is comfortable, or is configured to determine the feeling information by estimation.

The evaluating device 40 allowing the one or more persons-in-room to input information regarding the feeling information includes the input unit 41 to be manually operated by the one or more persons-in-room. The evaluating device 40 including the input unit 41 is configured to output the feeling information indicative of the information inputted into the input unit 41 to the operation determining unit 13. When the presentation device 50 is an operating and displaying device, the presentation device 50 can serve as the input unit 41.

In the present embodiment, the air environment is assumed to include the temperature and the humidity in addition to the air quality. The input unit 41 is configured to receive the feeling information regarding the air quality, and is further configured to receive the feeling information regarding the temperature and the humidity. The feeling information regarding the air quality is referred to as first feeling information, and the feeling information regarding the temperature and the humidity is referred to as second feeling information. Further, the feeling information regarding the temperature and the feeling information regarding the humidity are not distinguished, and are collectively treated as thermal feeling.

For example, with regard to the air quality, the input unit 41 includes a configuration of allowing input of the feeling information of two values corresponding to "comfortable" and "uncomfortable". With regard to the thermal feeling, the input unit 41 includes a configuration of allowing input of the feeling information of three or more values corresponding to "comfortable", "hot", and "cold".

When the presentation device 50 is an operating and displaying device and the presentation device 50 serves as the input unit 41, it is possible to easily realize a configuration of allowing input of three or more values as the feeling information. For example, the presentation device 50 displays a set of scale marks representing degrees of the comfort and a cursor for indicating a desired scale mark, and allows manual operation of placing the cursor in a position corresponding to a desired one of the set. In this case, the presentation device 50 can serve as the input unit 41.

When the input unit 41 of this configuration is used, there is no need to use a numerical value to input the degree of the thermal comfort. When the cursor displayed by the presentation device 50 is moved, the position of the moved cursor indicates the corresponding degree of the thermal comfort. Therefore, a person-in-room can intuitively input the degree of the comfort suitable for the feeling of the person-in-room.

When the comfort regarding the thermal feeling is represented by the PMV, scale marks may be displayed on a screen of the presentation device 50 so that each scale mark indicates a half to quarter of one level of the PMV, and the cursor may be moved to be positioned any one of the scale marks. As described above, a change of 0.5 in the PMV corresponds to a change of about 1°C. Therefore, by use of the scale marks according to the PMV, a modification value for the basic information can be easily determined by the location of the cursor.

When the air quality can be made to be comfortable by use of any one or more of the first ventilator 21, the second ventilator 22, and the third ventilator 23, and when the feeling information outputted from the evaluating device 40 indicates "uncomfortable", the ventilation is performed in order to improve the air quality. In other words, when the air quality of the outdoor space is higher than the air quality of the indoor space, the air quality is improved by only ventilation without using the air purifier 25.

In contrast, when improvement of the air quality cannot be achieved by the ventilation, that is, when the air quality of the outdoor space is lower than the air quality of the indoor space, cooperation with the air purifier 25 is performed. Or, when the thermal feeling becomes comfortable by taking air of the outdoor space in the indoor space, the air purifier 25 is used in combination with any one or more of the first ventilator 21, the second ventilator 22, and the third ventilator 23.

For example, with regard to the ventilation by the second ventilator 22, the air purifier 25 may be located in a place for taking in air from the outdoor space in order to purify air to be taken in the indoor space. The air purifier 25 used for this purpose preferably includes an HEPA filter (High Efficiency Particulate Air Filter) in order to remove particulate substances, pollens, and the like.

In contrast, when improvement of the thermal feeling of the indoor space cannot be achieved by taking in air from the outdoor space, the air conditioning device 24 is used. Additionally, when the air quality of the indoor space indicates "uncomfortable", the air purifier 25 is used together.

The aforementioned operation is a basic operation under a prerequisite that one or more person are present inside the indoor space. Actually, in some cases, no person may be present in the indoor space, or, even if one or more persons are present in the indoor space, they may be asleep. As described above, the first ventilator 21 is more effective in energy saving than the third ventilator 23 and has a larger opening area than the second ventilator 22, and therefore it can easily keep the air quality of the indoor space equivalent to the air quality of the air environment of the outdoor space. While the first ventilator 21 is opened, monitoring by persons is necessary for security.

For this reason, the first ventilator 21, the second ventilator 22, and the third ventilator 23 are preferably to be controlled according to conditions regarding whether one or more persons are present, and an activity situation of one or more persons, and the like, in addition to a condition regarding the air environment such as the air quality, the temperature, and the humidity. For example, in a period when one or more persons are out, and a period when one or more persons are asleep, one or more persons cannot monitor the first ventilator 21. Hence, a control content of the regulating device 20 is preferably changed depending on whether a period can be monitored by persons. In summary, it is preferable to add information regarding persons to a condition used by the operation determining unit 13 to generate the control information. TABLE 1 shows examples of the condition. The item of conditions shows two conditions separated by "/", and the item of ventilators shows two states of Use (OP) and Non-use (NOP) which are separated by "/".

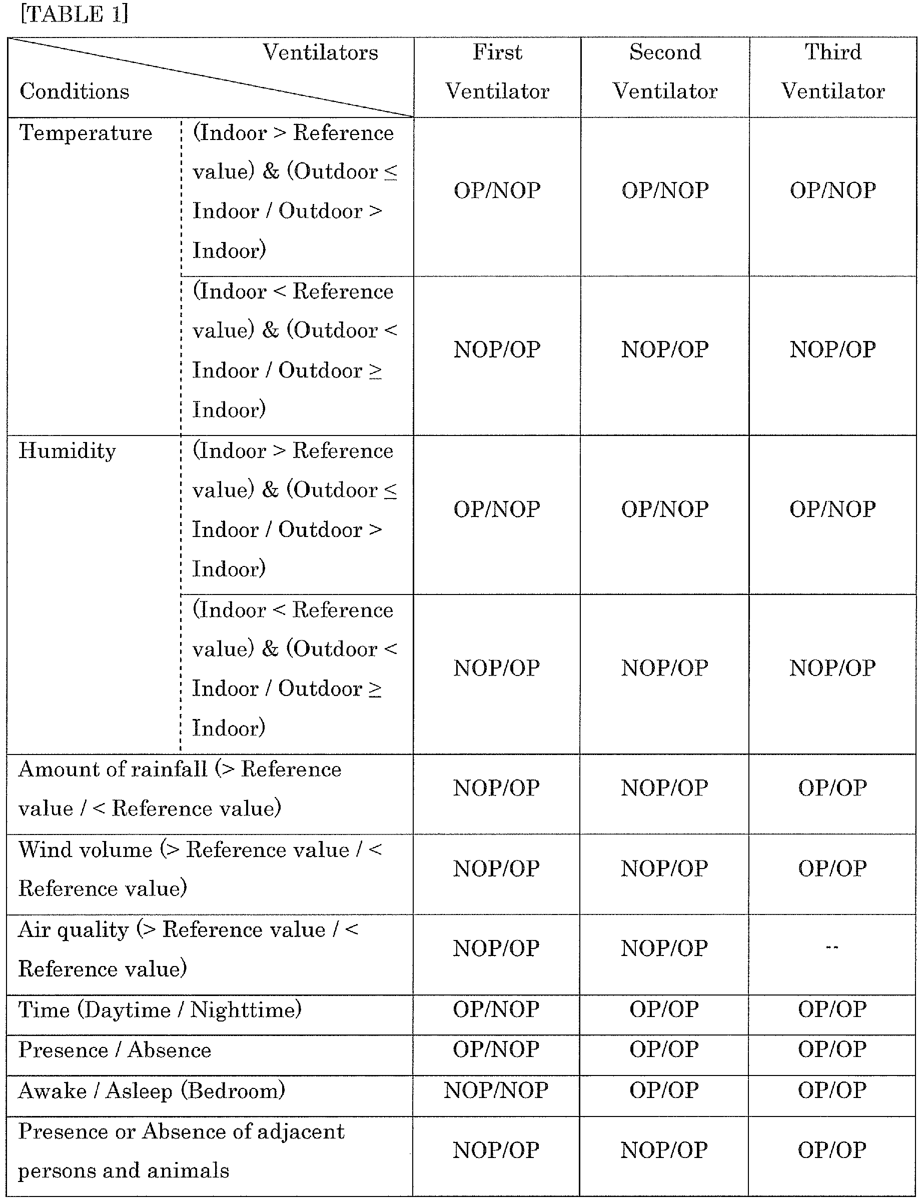

For example, the condition "(Indoor > Reference value) & (Outdoor ≤ Indoor / Outdoor > Indoor)" regarding the temperature means two conditions that "the room temperature exceeds the reference value and the temperature of the outdoor space is equal to or less than the temperature of the indoor space" and the "the room temperature exceeds the reference value and the temperature of the outdoor space is more than the temperature of the indoor space". Further, "OP/NOP" in the item of the first ventilator 21 indicates "Use (OP)" and "Non-use (NOP)" respectively corresponding to the two conditions shown in the first row. In this example, when "the room temperature exceeds the reference value and the temperature of the outdoor space is equal to or less than the temperature of the indoor space", the operation determining unit 13 uses the first ventilator 21. Or, when "the room temperature exceeds the reference value and the temperature of the outdoor space is more than the temperature of the indoor space", the operation determining unit 13 does not use the first ventilator 21.

In the examples shown in TABLE 1, the conditions of the air environment include an amount of rainfall and a wind volume. However, the amount of rainfall and the wind volume are optional. Further, the information regarding persons is a combination of "Time", "Presence / Absence", "Awake / Asleep (Bedroom)", and "Presence or Absence of adjacent persons and animals". With regard to residences, "Presence / Absence" can be read as "Staying in / Going out".

"Time" is preliminarily set in accordance with an activity schedule by a user. "Presence / Absence" can be determined by a device for monitoring activities of residents. However, such a device is likely to cause false determination. Hence, it is preferable to use a configuration of allowing residents to determine "staying in" or "going out" by manually operating one or more switches. Further, by using a configuration of allowing residents to determine "staying in" or "going out" by manually operating smartphones or tablets, the determination can be made after the residents go out. Hence, convenience can be improved. A similar manner to the above can be applied to "Awake / Asleep".

"Presence or Absence of adjacent persons and animals" is determined by use of one or more of sensors and cameras for monitoring an area surrounding the first ventilator 21. Although human sensors using pyroelectric infrared sensors have relatively high sensitivity, they cannot distinguish the residents from suspicious persons. For this reason, it is preferable to use cameras and perform at least one of face recognition and shape matching.

When the conditions are decided as with TABLE 1, the operation determining unit 13 extracts a combination fulfilling a condition that all of the states of the first ventilator 21, the second ventilator 22, and the third ventilator 23 are "Use (OP)", from the air environment measured by the measuring device 30 and the other conditions. With regard to a case of only performing ventilation, this extracted combination is used as the basic information. Further, when the operation determining unit 13 fails to extract the combination fulfilling the condition that all the states of the first ventilator 21, the second ventilator 22, and the third ventilator 23 are "Use (OP)", the operation determining unit 13 generates the basic information determining that the air conditioning device 24 and the air purifier 25 are operated.

The controlling device 10 provides the basic information to the regulating device 20, thereby instructing the regulating device 20 to start operation. After a lapse of predetermined time from the time when the regulating device 20 starts to operate in accordance with the basic information, the controlling device 10 is allowed to receive the feeling information form the evaluating device 40. A time period from the time of providing the basic information to the time of allowing reception of the feeling information is set to an extent that the air environment of the indoor space and the thermal feeling of the one or more persons-in-room are made to be stable by operation of the regulating device 20. This time period may be different depending on an activity history of the one or more persons-in-room, but may be a fixed value in a range of about 10 to 30 minutes.

When the conditions shown in TABLE 1 are used, the first ventilator 21 is not used during time of absence including going-out or time of sleeping, in principle. Further, when adjacent persons and animals are present, the first ventilator 21 is not used. When adjacent persons and animals are not present, use of the first ventilator 21 is allowed. Note that, TABLE 1 is an only example, and therefore combinations of the conditions and the operations of the regulating device 20 can be set appropriately.

The information regarding persons, that is, persons-in-room information is outputted from a monitoring device 60 selected from one or more of switches, smartphones, tablets, pyroelectric infrared sensors, cameras, and the like, as described above. The person-in-room information may contain information on whether one or more persons are present inside the room, and may further contain the number of persons when one or more persons are present inside the room. Additionally, the person-in-room information is used to modify the control information, and therefore may contain information on the amount of clothing, the metabolic rate and the like affecting on the thermal feeling of persons. The person-in-room information relating to the number of persons, the amount of clothing, and the metabolic rate can be obtained by analyzing images taken by one or more cameras.

As described above, the air environment regulating system may include the monitoring device 60 configured to output person-in-room information with regard to the one or more persons-in-room. The controlling device 10 is preferably configured to modify the control information with the person-in-room information. Note that, the monitoring device 60 is optional.

### (Another configuration example of evaluating device)

In the aforementioned configuration, the evaluating device 40 includes the input unit 41. If modification to the basic information is performed without operation of the input unit 41, the evaluating device 40 becomes more convenient to the one or more persons-in-room. In view of this, the evaluating device 40 of another configuration of the present embodiment stores information on past operations of the input unit 41, and estimates the feeling information based on stored information.

In more detail, the evaluating device 40 includes the history storage unit 42 configured to store past information necessary for estimating the feeling information, and the estimating unit 43 configured to estimate the feeling information regarding a case where one or more persons-in-room are present in the indoor space, based on the information stored in the history storage unit 42.

The history storage unit 42 is configured to store one or more records each including a combination of the measurement information measured by the measuring device 30, the basic information generated by the controlling device 10, and the feeling information outputted from the evaluating device 40. Further, it is preferable that the history storage unit 42 be configured to additionally store the control information obtained by modifying the basic information with the feeling information by the controlling device 10. The history storage unit 42 is configured to store the aforementioned record each time the control information is changed. Thus, when the control information is changed, the measurement information and the feeling information associated with the condition used for generating the control information are stored in the history storage unit 42. Further, the record to be stored in the history storage unit 42 preferably includes date and time indicated by the clock.

In the aforementioned operation example, the history storage unit 42 stores the record only when the control information is changed. The history storage unit 42 may obtain the record periodically, and the obtained record may be stored in the history storage unit 42 alone or together with the record associated with a change in the control information. A time interval for storing records in the history storage unit 42 may be selected from 10 minutes, 30 minutes, 1 hour, and the like.

If the number of records stored in the history storage unit 42 is equal to or more than a predetermined number, the estimating unit 43 can estimate the feeling information based on one or more records stored in the history storage unit 42, even when the feeling information is not inputted through the input unit 41 by the one or more persons-in-room. The estimating unit 43 retrieves a combination of the measurement information measured by the measuring device 30 and the feeling information or the control information from the history storage unit 42, and learns a relationship between the measurement information and the feeling information inputted through the input unit 41 by the one or more persons-in-room. Further, the estimating unit 43 provides the measurement information measured by the measuring device 30 to the estimating unit 43 based on the result of learning, thereby estimating the feeling information. Consequently, if the one or more persons-in-room do not manually operate the input unit 41, it is possible to provide the feeling information from the evaluating device 40 to the controlling device 10.

Note that, the aforementioned embodiment is one example according to the present invention. Hence, the scope of the present invention is defined by the claims.

## Claims

1. A controlling device (10) for an air environment regulating system which air environment regulating system comprises a regulating device (20) that is configured to regulate an air environment of an indoor space which includes an air quality, a measuring device (30) configured to measure the air environment of the indoor space, and an evaluating device (40) configured to output feeling information reflecting a result of evaluating a degree of comfort with regard to the air environment of the indoor space by one or more persons-in-room, the regulating device (20) including one or more ventilators (21, 22, 23) for causing a movement of air between the indoor space and an outdoor space, and the measuring device (30) being configured to measure an air environment of the outdoor space in addition to the air environment of the indoor space, wherein the evaluating device (40) includes an input unit (41) configured to allow the one or more persons-in-room in the indoor space to input information regarding the feeling information, and is configured to output the feeling information indicative of the information inputted into the input unit (41), or wherein the evaluating device (40) includes:a history storage unit (42) configured to store one or more records each of which includes a combination of the measurement information, the control information, and the feeling information and added each time the control information is changed; andan estimating unit (43) configured to estimate the feeling information from a combination of the measurement information and the control information with reference to the one or more records stored in the history storage unit (42), and is configured to output the feeling information indicative of a result of estimation by the estimating unit (43); wherein
the controlling device (10) is configured to generate control information for controlling the regulating device (20) and wherein the controlling device (10) comprises:
an obtaining unit (11) configured to obtain measurement information with regard to the air environment of the indoor space measured by the measuring device (30), and
an operation determining unit (13) configured to generate the control information by modifying, with the feeling information, basic information derived from the measurement information;
**characterized in that**
the basic information is for operating the regulating device (20), the basic information being information indicative of a relationship between a condition indicative of a combination of the measurement information obtained from the measuring device (30) and a condition indicative of desired operation of the regulating device (20),
**in that** the controlling device (10) is configured to provide the basic information to the regulating device (20), thereby instructing the regulating device (20) to start operation, the controlling device (10) being configured to be allowed to receive the feeling information from the evaluating device (40) after a lapse of predetermined time from a time when the regulating device (20) starts to operate in accordance with the basic information,
**in that** a time period from a time of providing the basic information to a time of allowing reception of the feeling information is set to an extent that the air environment of the indoor space is made to be stable by operation of the regulating device (20),
wherein the time period is a fixed value that is different depending on an activity history of the one or more persons-in-room, and
**in that** the controlling device (10) being configured to generate the control information by modifying the basic information with the received feeling information.

2. The controlling device (10) of claim 1, wherein
the controlling device (10) is configured to determine, based on information of the air environment of the indoor space and the air environment of the outdoor space measured by the measuring device (30), whether to use the one or more ventilators (21, 22, 23) for causing a movement of air between the indoor space and the outdoor space.

3. The controlling device (10) of claim 1 or 2, configured to, when the air quality of the outdoor space is higher than the air quality of the indoor space, generate the control information for causing ventilation to be performed by the one or more ventilators (21, 22, 23) in order to improve the air quality.

4. The controlling device (10) of claim 3, wherein:
the regulating device (20) includes an air purifier (25);
the controlling device (10) is configured to, when the air quality of the outdoor space is lower than the air quality of the indoor space, generate the control information for causing purification of air, which is to be taken in the indoor space, to be performed by the air purifier (25) in order to improve the air quality.

5. The controlling device (10) of claim 4, configured to, when the air quality of the outdoor space is higher than the air quality of the indoor space, generate the control information for causing only the ventilation to be perfomed by the one or more ventilators (21, 22, 23) and not using the air purifier (25).

6. Air environment regulating system,
comprising a controlling device (10) and
a regulating device (20) that is configured to regulate an air environment of an indoor space which includes an air quality, a measuring device (30) configured to measure the air environment of the indoor space, and
an evaluating device (40) configured to output feeling information reflecting a result of evaluating a degree of comfort with regard to the air environment of the indoor space by one or more persons-in-room, the regulating device (20) including one or more ventilators (21, 22, 23) for causing a movement of air between the indoor space and an outdoor space, and the measuring device (30) being configured to measure an air environment of the outdoor space in addition to the air environment of the indoor space,
wherein the evaluating device (40) includes an input unit (41) configured to allow the one or more persons-in-room in the indoor space to input information regarding the feeling information, and is configured to output the feeling information indicative of the information inputted into the input unit (41), or wherein
the evaluating device (40) includes: a history storage unit (42) configured to store one or more records each of which includes a combination of the measurement information, the control information, and the feeling information and added each time the control information is changed; and an estimating unit (43) configured to estimate the feeling information from a combination of the measurement information and the control information with reference to the one or more records stored in the history storage unit (42), and is configured to output the feeling information indicative of a result of estimation by the estimating unit (43);
wherein the controlling device (10) is configured to generate control information for controlling the regulating device (20) and wherein the controlling device (10) comprises: an obtaining unit (11) configured to obtain measurement information with regard to the air environment of the indoor space measured by the measuring device (30), and an operation determining unit (13) configured to generate the control information by modifying, with the feeling information, basic information derived from the measurement information;
**characterized in that** the basic information is for operating the regulating device (20), the basic information being information indicative of a relationship between a condition indicative of a combination of the measurement information obtained from the measuring device (30) and a condition indicative of desired operation of the regulating device (20), **in that** the controlling device (10) is configured to provide the basic information to the regulating device (20), thereby instructing the regulating device (20) to start operation, the controlling device (10) being configured to be allowed to receive the feeling information from the evaluating device (40) after a lapse of predetermined time from a time when the regulating device (20) starts to operate in accordance with the basic information, **in that** a time period from a time of providing the basic information to a time of allowing reception of the feeling information is set to an extent that the air environment of the indoor space is made to be stable by operation of the regulating device (20), wherein the time period is a fixed value that is different depending on an activity history of the one or more persons-in-room, and **in that** the controlling device (10) being configured to generate the control information by modifying the basic information with the received feeling information.

7. The air environment regulating system according to claim 6, wherein:
the air environment includes a temperature in addition to the air quality; and
the evaluating device (40) is configured to output first feeling information regarding a result of evaluating the air quality by the one or more persons-in-room and second feeling information regarding a result of evaluating thermal comfort by the one or more persons-in-room.

8. The air environment regulating system according to any one of claims 6 to 7, further comprising: a monitoring device (60) configured to output person-in-room information with regard to the one or more persons-in-room,
the controlling device (10) being configured to modify the control information with the person-in-room information.

9. The air environment regulating system according to any one of claims 6 to 8, wherein
the regulating device (20) includes a device configured to regulate at least one of an air quality evaluated based on amounts of substances included in an air in the indoor space, a temperature of the indoor space, and a humidity of the indoor space without causing a movement of air between the indoor space and an outdoor space.

## Patentansprüche

1. Steuerungsvorrichtung (10) für ein Umgebungsregelungssystem, wobei das Umgebungsregelungssystem aufweist:
eine Regelungsvorrichtung (20), die konfiguriert ist, um eine Luftumgebung eines Innenraums zu regeln, die eine Luftqualität umfasst, eine Messvorrichtung (30), die konfiguriert ist, um die Luftumgebung des Innenraums zu messen, und eine Bewertungsvorrichtung (40), die konfiguriert ist, um Gefühlsinformationen auszugeben, die ein Ergebnis der Bewertung eines Behaglichkeitsgrades in Bezug auf die Luftumgebung des Innenraums durch eine oder mehrere Personen im Raum widerspiegeln, wobei die Regelungsvorrichtung (20) einen oder mehrere Ventilatoren (21, 22, 23) enthält, um eine Bewegung von Luft zwischen dem Innenraum und einem Außenraum zu veranlassen, und die Messvorrichtung (30) konfiguriert ist, um zusätzlich zu der Luftumgebung des Innenraums eine Luftumgebung des Außenraums zu messen,
wobei die Bewertungsvorrichtung (40) eine Eingabeeinheit (41) enthält, die konfiguriert ist, um es der einen oder den mehreren Personen im Raum in dem Innenraum zu ermöglichen, Informationen bezüglich der Gefühlsinformationen einzugeben, und konfiguriert ist, um die Gefühlsinformationen, die die in die Eingabeeinheit (41) eingegebenen Informationen angeben, auszugeben, oder wobei die Bewertungsvorrichtung (40) enthält: eine Verlaufsspeichereinheit (42), die konfiguriert ist, um einen oder mehrere Datensätze zu speichern, von denen jeder eine Kombination der Messinformationen, der Steuerungsinformationen und der Gefühlsinformationen enthält und jedes Mal hinzugefügt wird, wenn die Steuerungsinformationen geändert werden; und eine Schätzeinheit (43), die konfiguriert ist, um die Gefühlsinformationen aus einer Kombination der Messinformationen und der Steuerungsinformationen unter Bezugnahme auf den einen oder die mehreren Datensätze, die in der Verlaufsspeichereinheit (42) gespeichert sind, zu schätzen, und konfiguriert ist, um die Gefühlsinformationen, die ein Ergebnis der Schätzung durch die Schätzeinheit (43) angeben, auszugeben;
wobei
die Steuerungsvorrichtung (10) konfiguriert ist, um Steuerungsinformationen zum Steuern der Regelungsvorrichtung (20) zu erzeugen, und wobei die Steuerungsvorrichtung (10) aufweist:
eine Gewinnungseinheit (11), die konfiguriert ist, um Messinformationen in Bezug auf die von der Messvorrichtung (30) gemessene Luftumgebung des Innenraums zu gewinnen, und eine Betriebsbestimmungseinheit (13), die konfiguriert ist,
um die Steuerungsinformationen zu erzeugen, indem sie Basisinformationen, die von den Messinformationen abgeleitet sind, mit den Gefühlsinformationen modifiziert;
**dadurch gekennzeichnet, dass**
die Basisinformationen zum Betreiben der Regelungsvorrichtung (20) dienen, wobei die Basisinformationen Informationen sind, die eine Beziehung zwischen einem Zustand, der eine Kombination der Messinformationen angibt, die von der Messvorrichtung (30) gewonnen sind, und einem Zustand, der den gewünschten Betrieb der Regelungsvorrichtung (20) angibt, angeben,
dass die Steuerungsvorrichtung (10) konfiguriert ist, um die Basisinformationen für die Regelungsvorrichtung (20) vorzusehen, so dass die Regelungsvorrichtung (20) dadurch angewiesen wird, den Betrieb zu beginnen, wobei die Steuerungsvorrichtung (10) konfiguriert ist, um die Gefühlsinformationen von der Bewertungsvorrichtung (40) nach Ablauf einer vorbestimmten Zeit ab einem Zeitpunkt empfangen zu können, zu dem die Regelungsvorrichtung (20) beginnt, in Übereinstimmung mit den Basisinformationen zu arbeiten,
dass eine Zeitspanne von einem Zeitpunkt des Vorsehens der Basisinformationen bis zu einem Zeitpunkt der Ermöglichung des Empfangs der Gefühlsinformationen in einem Ausmaß eingestellt ist, dass die Luftumgebung des Innenraums durch den Betrieb der Regelungsvorrichtung (20) stabilisiert wird, wobei die Zeitspanne ein fester Wert ist, der in Abhängigkeit von einem Aktivitätsverlauf der einen oder
mehreren Personen im Raum unterschiedlich ist, und
dass die Steuerungsvorrichtung (10) konfiguriert ist, um die Steuerungsinformationen durch ein Modifizieren der Basisinformationen mit den empfangenen Gefühlsinformationen zu erzeugen.

2. Steuerungsvorrichtung (10) nach Anspruch 1, wobei die Steuerungsvorrichtung (10) konfiguriert ist, um auf der Grundlage von Informationen über die Luftumgebung des Innenraums und die Luftumgebung des Außenraums, die von der Messvorrichtung (30) gemessen werden, zu bestimmen, ob der eine oder die mehreren Ventilatoren (21, 22, 23) zu verwenden sind, um eine Bewegung von Luft zwischen dem Innenraum und dem Außenraum zu veranlassen.

3. Steuerungsvorrichtung (10) nach Anspruch 1 oder 2, die konfiguriert ist, um, wenn die Luftqualität des Außenraums höher ist als die Luftqualität des Innenraums, die Steuerungsinformationen zu erzeugen, um die Durchführung einer Belüftung durch den einen oder die mehreren Ventilatoren (21, 22, 23) zu veranlassen, um die Luftqualität zu verbessern.

4. Steuerungsvorrichtung (10) nach Anspruch 3, wobei:
die Regelungsvorrichtung (20) einen Luftreiniger (25) aufweist;
die Steuerungsvorrichtung (10) konfiguriert ist, um, wenn die Luftqualität des Außenraums niedriger ist als die Luftqualität des Innenraums, die Steuerungsinformationen zu erzeugen, um eine durch den Luftreiniger (25) durchzuführende Reinigung von Luft, die in dem Innenraum aufzunehmen ist, zu veranlassen, um die Luftqualität zu verbessern.

5. Steuerungsvorrichtung (10) nach Anspruch 4, die konfiguriert ist, um, wenn die Luftqualität des Außenraums höher ist als die Luftqualität des Innenraums, die Steuerungsinformationen zu erzeugen, um zu veranlassen, dass nur die Belüftung durch den einen oder die mehreren Ventilatoren (21, 22, 23) durchzuführen ist und der Luftreiniger (25) nicht verwendet wird.

6. Umgebungsregelungssystem, aufweisend:
eine Steuerungsvorrichtung (10) und
eine Regelungsvorrichtung (20), die konfiguriert ist, um eine Luftumgebung eines Innenraums zu regeln, die eine Luftqualität umfasst, eine Messvorrichtung (30), die konfiguriert ist, um die Luftumgebung des Innenraums zu messen, und eine Bewertungsvorrichtung (40), die konfiguriert ist, um Gefühlsinformationen auszugeben, die ein Ergebnis der Bewertung eines Behaglichkeitsgrades in Bezug auf die Luftumgebung des Innenraums durch eine oder
mehrere Personen im Raum widerspiegeln, wobei die Regelungsvorrichtung (20) einen oder mehrere Ventilatoren (21, 22, 23) enthält, um eine Bewegung von Luft zwischen dem Innenraum und einem Außenraum zu veranlassen, und die Messvorrichtung (30) konfiguriert ist, um zusätzlich zu der Luftumgebung des Innenraums eine Luftumgebung des Außenraums zu messen,
wobei die Bewertungsvorrichtung (40) eine Eingabeeinheit (41) enthält, die konfiguriert ist, um es der einen oder den mehreren Personen im Raum in dem Innenraum zu ermöglichen, Informationen bezüglich der Gefühlsinformationen einzugeben, und konfiguriert ist, um die Gefühlsinformationen, die die in die Eingabeeinheit (41) eingegebenen Informationen angeben, auszugeben, oder wobei die Bewertungsvorrichtung (40) enthält: eine Verlaufsspeichereinheit (42), die konfiguriert ist, um einen oder mehrere Datensätze zu speichern, von denen jeder eine Kombination der Messinformationen, der Steuerungsinformationen und der Gefühlsinformationen enthält und jedes Mal hinzugefügt wird,
wenn die Steuerungsinformationen geändert werden; und eine Schätzeinheit (43), die konfiguriert ist, um die Gefühlsinformationen aus einer Kombination der Messinformationen und der Steuerungsinformationen unter Bezugnahme auf den einen oder die mehreren Datensätze, die in der Verlaufsspeichereinheit (42) gespeichert sind, zu schätzen, und konfiguriert ist, um die Gefühlsinformationen,
die ein Ergebnis der Schätzung durch die Schätzeinheit (43) angeben, auszugeben;
wobei die Steuerungsvorrichtung (10) konfiguriert ist, um Steuerungsinformationen zum Steuern der Regelungsvorrichtung (20) zu erzeugen, und wobei die Steuerungsvorrichtung (10) aufweist: eine Gewinnungseinheit (11), die konfiguriert ist,
um Messinformationen in Bezug auf die von der Messvorrichtung (30) gemessene Luftumgebung des Innenraums zu gewinnen, und eine Betriebsbestimmungseinheit (13), die konfiguriert ist, um die Steuerungsinformationen zu erzeugen, indem sie Basisinformationen, die von den Messinformationen abgeleitet sind, mit den Gefühlsinformationen modifiziert;
**dadurch gekennzeichnet, dass** die Basisinformationen zum Betreiben der Regelungsvorrichtung (20) dienen, wobei die Basisinformationen Informationen sind, die eine Beziehung zwischen einem Zustand, der eine Kombination der Messinformationen angibt, die von der Messvorrichtung (30) gewonnen sind, und einem Zustand, der den gewünschten Betrieb der Regelungsvorrichtung (20) angibt, angeben, dass die Steuerungsvorrichtung (10) konfiguriert ist, um die Basisinformationen für die Regelungsvorrichtung (20) vorzusehen, so dass die Regelungsvorrichtung (20) dadurch angewiesen wird, den Betrieb zu beginnen, wobei die Steuerungsvorrichtung (10) konfiguriert ist, um die Gefühlsinformationen von der Bewertungsvorrichtung (40) nach Ablauf einer vorbestimmten Zeit ab einem Zeitpunkt empfangen zu können, zu dem die Regelungsvorrichtung (20) beginnt, in Übereinstimmung mit den Basisinformationen zu arbeiten, dass eine Zeitspanne von einem Zeitpunkt des Vorsehens der Basisinformationen bis zu einem Zeitpunkt der Ermöglichung des Empfangs der Gefühlsinformationen in einem Ausmaß eingestellt ist, dass die Luftumgebung des Innenraums durch den Betrieb der Regelungsvorrichtung (20) stabilisiert wird, wobei die Zeitspanne ein fester Wert ist, der in Abhängigkeit von einem Aktivitätsverlauf der einen oder mehreren Personen im Raum unterschiedlich ist, und dass die Steuerungsvorrichtung (10) konfiguriert ist, um die Steuerungsinformationen durch ein Modifizieren der Basisinformationen mit den empfangenen Gefühlsinformationen zu erzeugen.

7. Umgebungsregelungssystem nach Anspruch 6, wobei:
die Luftumgebung zusätzlich zu der Luftqualität eine Temperatur aufweist; und
die Bewertungsvorrichtung (40) konfiguriert ist, um erste Gefühlsinformationen bezüglich eines Ergebnisses der Bewertung der Luftqualität durch die eine oder die mehreren Personen im Raum und zweite Gefühlsinformationen bezüglich eines Ergebnisses der Bewertung der Wärmebehaglichkeit durch die eine oder die mehreren Personen im Raum auszugeben.

8. Umgebungsregelungssystem nach einem der Ansprüche 6 bis 7, ferner aufweisend: eine Überwachungsvorrichtung (60), die konfiguriert ist, um Person-im-Raum-Informationen in Bezug auf die eine oder die mehreren Personen im Raum auszugeben, wobei die Steuerungsvorrichtung (10) konfiguriert ist, um die Steuerungsinformationen mit den Person-im-Raum-Informationen zu modifizieren.

9. Umgebungsregelungssystem nach einem der Ansprüche 6 bis 8, wobei
die Regelungsvorrichtung (20) eine Vorrichtung aufweist, die konfiguriert ist, um mindestens eine Luftqualität, die auf der Grundlage der in der Luft in dem Innenraum enthaltenen Mengen von Stoffen bewertet wird, eine Temperatur des Innenraums und eine Feuchtigkeit des Innenraums zu regeln, ohne eine Bewegung von Luft zwischen dem Innenraum und einem Außenraum zu veranlassen.

## Revendications

1. Dispositif de commande (10) pour un système de régulation d'environnement atmosphérique, lequel système de régulation d'environnement atmosphérique comprend un dispositif de régulation (20) qui est configuré de manière à réguler un environnement atmosphérique d'un espace intérieur, ce qui inclut une qualité de l'air, un dispositif de mesure (30) configuré de manière à mesurer l'environnement atmosphérique de l'espace intérieur, et un dispositif d'évaluation (40) configuré de manière à fournir en sortie des informations de ressenti reflétant un résultat d'évaluation d'un degré de confort en ce qui concerne l'environnement atmosphérique de l'espace intérieur, par une ou plusieurs personnes présentes dans la pièce, le dispositif de régulation (20) incluant un ou plusieurs ventilateurs (21, 22, 23) destinés à occasionner un déplacement d'air entre l'espace intérieur et un espace extérieur, et le dispositif de mesure (30) étant configuré de manière à mesurer un environnement atmosphérique de l'espace extérieur, en plus de l'environnement atmosphérique de l'espace intérieur, dans lequel le dispositif d'évaluation (40) inclut une unité d'entrée (41) configurée de manière à permettre à ladite une ou auxdites plusieurs personnes présentes dans la pièce, dans l'espace intérieur, d'entrer des informations concernant les informations de ressenti, et est configuré de manière à fournir en sortie les informations de ressenti indicatives des informations appliquées en entrée dans l'unité d'entrée (41), ou dans lequel le dispositif d'évaluation (40) inclut : une unité de stockage d'historique (42) configurée de manière à stocker un ou plusieurs enregistrements qui incluent chacun une combinaison des informations de mesure, des informations de commande et des informations de ressenti et qui sont ajoutés chaque fois que les informations de commande sont modifiées ; et une unité d'estimation (43) configurée de manière à estimer les informations de ressenti à partir d'une combinaison des informations de mesure et des informations de commande en référence audit un ou auxdits plusieurs enregistrements stockés dans l'unité de stockage d'historique (42), et configurée de manière à fournir en sortie les informations de ressenti indicatives d'un résultat d'estimation par l'unité d'estimation (43) ;
dans lequel :
le dispositif de commande (10) est configuré de manière à générer des informations de commande destines à commander le dispositif de régulation (20), et dans lequel le dispositif de commande (10) comprend :
une unité d'obtention (11) configurée de manière à obtenir des informations de mesure en ce qui concerne l'environnement atmosphérique de l'espace intérieur mesuré par le dispositif de mesure (30) ; et
une unité de détermination de fonctionnement (13) configurée de manière à générer les informations de commande en modifiant, avec les informations de ressenti, des informations de base dérivées des informations de mesure ;
**caractérisé en ce que** :
les informations de base sont destinées à faire fonctionner le dispositif de régulation (20), les informations de base étant des informations indicatives d'une relation entre une condition indicative d'une combinaison des informations de mesure obtenues à partir du dispositif de mesure (30) et une condition indicative du fonctionnement souhaité du dispositif de régulation (20) ;
**en ce que** le dispositif de commande (10) est configuré de manière à fournir les informations de base au dispositif de régulation (20), ordonnant par conséquent au dispositif de régulation (20) de commencer à fonctionner, le dispositif de commande (10) étant configuré de manière à être autorisé à recevoir les informations de ressenti en provenance du dispositif d'évaluation (40) après un laps de temps prédéterminé depuis un instant où le dispositif de régulation (20) commence à fonctionner conformément aux informations de base ;
**en ce qu'**une période de temps, depuis un instant de fourniture des informations de base jusqu'à un instant d'autorisation de réception des informations de ressenti, est définie dans une mesure telle que l'environnement atmosphérique de l'espace intérieur est rendu stable par le fonctionnement du dispositif de régulation (20) ;
dans lequel la période de temps est une valeur fixe qui est différente en fonction d'un historique d'activité de ladite une ou desdites plusieurs personnes présentes dans la pièce ; et
**en ce que** le dispositif de régulation (10) est configuré de manière à générer les informations de commande en modifiant les informations de base avec les informations de ressenti reçues.

2. Dispositif de commande (10) selon la revendication 1, dans lequel :
le dispositif de commande (10) est configuré de manière à déterminer, sur la base d'informations de l'environnement atmosphérique de l'espace intérieur et de l'environnement atmosphérique de l'espace extérieur mesurés par le dispositif de mesure (30), s'il convient d'utiliser ledit un ou lesdits plusieurs ventilateurs (21, 22, 23) en vue d'occasionner un déplacement d'air entre l'espace intérieur et l'espace extérieur.

3. Dispositif de commande (10) selon la revendication 1 ou 2, configuré de manière à, lorsque la qualité de l'air de l'espace extérieur est supérieure à la qualité de l'air de l'espace intérieur, générer les informations de commande pour occasionner la mise en œuvre de la ventilation par ledit un ou lesdits plusieurs ventilateurs (21, 22, 23) afin d'améliorer la qualité de l'air.

4. Dispositif de commande (10) selon la revendication 3, dans lequel :
le dispositif de régulation (20) inclut un purificateur d'air (25) ;
le dispositif de commande (10) est configuré de manière à, lorsque la qualité de l'air de l'espace extérieur est inférieure à la qualité de l'air de l'espace intérieur, générer les informations de commande afin de mettre en œuvre une purification de l'air, laquelle doit être prélevée dans l'espace intérieur, par le biais du purificateur d'air (25), afin d'améliorer la qualité de l'air.

5. Dispositif de commande (10) selon la revendication 4, configuré de manière à, lorsque la qualité de l'air de l'espace extérieur est supérieure à la qualité de l'air de l'espace intérieur, générer les informations de commande pour occasionner uniquement la mise en œuvre de la ventilation par ledit un ou lesdits plusieurs ventilateurs (21, 22, 23) et ne pas faire appel au purificateur d'air (25).

6. Système de régulation d'environnement atmosphérique, comprenant un dispositif de commande (10) et un dispositif de régulation (20) qui est configuré de manière à réguler un environnement atmosphérique d'un espace intérieur, ce qui inclut une qualité de l'air, un dispositif de mesure (30) configuré de manière à mesurer l'environnement atmosphérique de l'espace intérieur, et un dispositif d'évaluation (40) configuré de manière à fournir en sortie des informations de ressenti reflétant un résultat d'évaluation d'un degré de confort en ce qui concerne l'environnement atmosphérique de l'espace intérieur, par une ou plusieurs personnes présentes dans la pièce, le dispositif de régulation (20) incluant un ou plusieurs ventilateurs (21, 22, 23) destinés à occasionner un déplacement d'air entre l'espace intérieur et un espace extérieur, et le dispositif de mesure (30) étant configuré de manière à mesurer un environnement atmosphérique de l'espace extérieur, en plus de l'environnement atmosphérique de l'espace intérieur ;
dans lequel le dispositif d'évaluation (40) inclut une unité d'entrée (41) configurée de manière à permettre à ladite une ou auxdites plusieurs personnes présentes dans la pièce, dans l'espace intérieur, d'entrer des informations concernant les informations de ressenti, et est configuré de manière à fournir en sortie les informations de ressenti indicatives des informations appliquées en entrée dans l'unité d'entrée (41), ou dans lequel le dispositif d'évaluation (40) inclut : une unité de stockage d'historique (42) configurée de manière à stocker un ou plusieurs enregistrements qui incluent chacun une combinaison des informations de mesure, des informations de commande et des informations de ressenti et qui sont ajoutés chaque fois que les informations de commande sont modifiées ; et une unité d'estimation (43) configurée de manière à estimer les informations de ressenti à partir d'une combinaison des informations de mesure et des informations de commande en référence audit un ou auxdits plusieurs enregistrements stockés dans l'unité de stockage d'historique (42), et configurée de manière à fournir en sortie les informations de ressenti indicatives d'un résultat d'estimation par l'unité d'estimation (43) ;
dans lequel le dispositif de commande (10) est configuré de manière à générer des informations de commande destines à commander le dispositif de régulation (20), et dans lequel le dispositif de commande (10) comprend : une unité d'obtention (11) configurée de manière à obtenir des informations de mesure en ce qui concerne l'environnement atmosphérique de l'espace intérieur mesuré par le dispositif de mesure (30), et une unité de détermination de fonctionnement (13) configurée de manière à générer les informations de commande en modifiant, avec les informations de ressenti, des informations de base dérivées des informations de mesure ;
**caractérisé en ce que** les informations de base sont destinées à faire fonctionner le dispositif de régulation (20), les informations de base étant des informations indicatives d'une relation entre une condition indicative d'une combinaison des informations de mesure obtenues à partir du dispositif de mesure (30) et une condition indicative du fonctionnement souhaité du dispositif de régulation (20), **en ce que** le dispositif de commande (10) est configuré de manière à fournir les informations de base au dispositif de régulation (20), ordonnant par conséquent au dispositif de régulation (20) de commencer à fonctionner, le dispositif de commande (10) étant configuré de manière à être autorisé à recevoir les informations de ressenti en provenance du dispositif d'évaluation (40) après un laps de temps prédéterminé depuis un instant où le dispositif de régulation (20) commence à fonctionner conformément aux informations de base, **en ce qu'**une période de temps, depuis un instant de fourniture des informations de base jusqu'à un instant d'autorisation de réception des informations de ressenti, est définie dans une mesure telle que l'environnement atmosphérique de l'espace intérieur est rendu stable par le fonctionnement du dispositif de régulation (20), dans lequel la période de temps est une valeur fixe qui est différente en fonction d'un historique d'activité de ladite une ou desdites plusieurs personnes présentes dans la pièce, et **en ce que** le dispositif de régulation (10) est configuré de manière à générer les informations de commande en modifiant les informations de base avec les informations de ressenti reçues.

7. Système de régulation d'environnement atmosphérique selon la revendication 6, dans lequel :
l'environnement atmosphérique inclut une température, outre la qualité de l'air ; et
le dispositif d'évaluation (40) est configuré de manière à fournir en sortie des premières informations de ressenti concernant un résultat d'évaluation de la qualité de l'air par ladite une ou lesdites plusieurs personnes présentes dans la pièce et des secondes informations de ressenti concernant un résultat d'évaluation d'un confort thermique par ladite une ou lesdites plusieurs personnes présentes dans la pièce.

8. Système de régulation d'environnement atmosphérique selon l'une quelconque des revendications 6 à 7, comprenant en outre : un dispositif de surveillance (60) configuré de manière à fournir en sortie des informations de personnes présentes dans la pièce concernant ladite une ou lesdites plusieurs personnes présentes dans la pièce ;
dans lequel le dispositif de commande (10) est configuré de manière à modifier les informations de commande avec les informations de personnes présentes dans la pièce.

9. Système de régulation d'environnement atmosphérique selon l'une quelconque des revendications 6 à 8, dans lequel :
le dispositif de régulation (20) inclut un dispositif configuré de manière à réguler au moins l'une parmi une qualité de l'air évaluée sur la base de quantités de substances incluses dans l'air au sein de l'espace intérieur, une température de l'espace intérieur, et une humidité de l'espace intérieur, sans occasionner de déplacement d'air entre l'espace intérieur et un espace extérieur.
